# EUROPEAN PATENT SPECIFICATION

(11) **EP 2 011 126 B1**
(45) Date of publication and mention of the grant of the patent: **23.05.2012**
(21) Application number: 06851254.0
(22) Date of filing: 16.12.2006
(51) Int. Cl.: G21G 1/00, B01D 15/10

(54) **SYSTEMS AND METHODS FOR RADIOISOTOPE GENERATION**
SYSTEM UND VERFAHREN ZUR RADIOISOTOPERZEUGUNG
SYSTÈMES ET PROCÉDÉS POUR LA GÉNÉRATION DE RADIO-ISOTOPES

(30) Priority: 12.01.2006 US 758419 P; 14.12.2006 US 610574
(43) Date of publication of application: 07.01.2009
(73) Proprietor: DRAXIMAGE General Partnership, Montreal, QC H9H 4J4 (CA)
(72) Inventor: TARTAGLIA, Daniel, St. Leonard, Quebec HIR 3Z6 (CA); COPPOLA, Carlo, Pointe-Claire, QC H9R 5Y2 (CA); TEOLI, Vince, Montreal, Quebec H2N 1W5 (CA); BOURNIVAL, Alain Guy, St. Lazarre, Quebec H2N 1W5 (CA)
(74) Representative: Holliday, Louise Caroline
(86) International application number: PCT/IB2006/004294
(87) International publication number: WO 2008/004028

(56) References cited:
- WO-A-97/45841
- CA-A1- 1 093 223
- US-A- 3 462 245
- US-A- 3 576 998
- US-A- 4 280 053
- US-A- 4 286 169
- US-A- 4 782 231
- US-A- 5 186 913
- US-A- 6 157 036
- US-B2- 6 998 052

## Description

### FIELD OF THE INVENTION

This invention relates generally to systems and methods for radioisotope generation. In one aspect, this invention relates to systems and methods for producing customized, predictable and reproducible supplies of radioisotopes for use in nuclear medicine.

### BACKGROUND OF THE INVENTION

Nuclear medicine is a branch of medicine dealing with the use of radioisotopes as radiopharmaceuticals or radioactive tracers in the diagnosis and treatment of disease. Radioisotopes are natural or artificially created isotopes (isotopes being one of two or more atoms having the same atomic number but different mass numbers) of a chemical element that have an unstable nucleus that decays, emitting alpha, beta, or gamma rays until stability is reached.

Radioisotopes, such as the meta stable Technetium-99m (Tc-99m), are used in medical tests as radioactive tracers that medical equipment can detect in the body. Other generator-derived radioisotopes that are used as tracers include yttrium-90, rhenium-188, and gallium-68 . Tc-99m, in particular, emits readily detectable gamma rays, and it has a half-life of 6 hours. A variety of different radiopharmaceuticals based on Tc-99m are used for imaging and functional studies of the brain, myocardium, thyroid, lungs, liver, gallbladder, kidneys, skeleton, blood and tumors. Schwochau, Klaus. Technetium, Wiley-VCH (2000) (ISBN 3-527-29496-1). Scientists continue to find new uses for radioisotopes, such as Tc-99m. For example, doctors recently used Tc-99m to diagnose precisely the infected lymph nodes in breast cancer patients by injecting Tc-99m into the breast around the tumor to allow them to locate the node quickly and precisely before ever making an incision. *Brookhaven National Laboratory site on the history of the technetium cow.* (http://www.bnl.gov/bnlweb/history/Tc-99m.asp).

A Tc-99m generator, often called a technetium cow, is a device used to extract Tc-99m from decaying molybdenum-99 ("Mo-99"). Mo-99 has a half-life of 66 hours and can be transported over long distances to radiopharmacies and hospitals where its decay product Tc-99m is used for nuclear medicine diagnostic procedures. Removing the Tc-99m from the generator ("milking" the generator) is typically done every 6 hours or, at most, twice daily. Most commercial generators use column chromatography, in which Mo-99 is adsorbed onto alumina. Normal saline solution can be run through a column of immobilized Mo-99 to elute soluble Tc-99m, resulting in a saline solution containing the Tc-99m.

Today, commercial radiopharmacies typically replace their generators on a biweekly basis, since the useful life of a Tc-99m generator is about 6 half lifes or approximately two weeks. Hence, typical clinical nuclear medicine units purchase at least one such generator every two weeks or order several in a staggered fashion. The lead-lined generators are heavy and bulky and represent significant manipulation and toil for personnel to replace and to dispose of spent generators. Large quantities of lead, molded plastic containers, and packing materials are used only once and discarded after two weeks. Shipping costs and waste are real considerations for end-users. Further, conventional generator systems lack flexibility as they are limited to fixed activity denominations per unit sold, resulting in limited predictability and reproducibility. Typical generators also do not provide activity above 19 Ci.

It would be desirable therefore to provide systems and methods for producing customized, predictable and reproducible supplies of radioisotopes, including high activity levels, that do not require weekly replacement, handling and transport of heavy shielding materials associated with conventional generators.

### SUMMARY OF THE INVENTION

In one aspect, the present invention provides a system comprising:
a reactor housing that is fabricated from a radioactive shielding material and has both an internal volume and a surface that comprises an entry port and an exit port;
a chromatographic column that is positioned within said internal volume wherein; said first chromatographic column is housed within a column assembly comprising:
   a column housing defining an internal space for receiving said first chromatographic column;
   a column adaptor plate;
   an exit pipe in fluid communication with said first chromatographic column via said column housing and with an exit connection that is mounted on said column adaptor plate; and
   an entry pipe in fluid communication with said first chromatographic column via said column housing and with an entry needle that is disposed in an adaptor plate entry port that is mounted on said column adaptor plate;
wherein said column assembly is configured for insertion as a unit into the internal volume of said reactor housing through an opening in an upper portion of said reactor housing; and;
a filter module that is disposed external to said reactor housing and in fluid communication with said column.

The present invention also provides a method comprising the steps of:
providing a system that comprises:
   a reactor housing that is fabricated from a radioactive shielding material and has both an internal volume and a surface that comprises an entry port and an exit port;
   a first chromatographic column that is positioned within said internal volume wherein
   said first chromatographic column is housed within a column assembly comprising:
   a column housing defining an internal space for receiving said first chromatographic column;
   a column adaptor plate;
   an exit pipe in fluid communication with said first chromatographic column via said column housing and with an exit connection that is mounted on said column adaptor plate; and
   an entry pipe in fluid communication with said first chromatographic column via said column housing and with an entry needle that is disposed in an adaptor plate entry port that is mounted on said column adaptor plate;
   wherein said column assembly is configured for insertion as a unit into the internal volume of said reactor housing through an opening in an upper portion of said reactor housing; and;
   a first filter module that is disposed external to said reactor housing and in fluid communication with said first chromatographic column; and
   positioning a first delivery vessel comprising a solution of at least one radioisotope external to said reactor housing and in fluid communication with said first chromatographic column for a time and under conditions effective to elute said first chromatographic column with at least a portion of said solution; and,
   positioning a collection vessel external to said reactor housing and in fluid communication with said exit port via said filter module.

In yet another aspect, the present invention provides a method comprising the steps of:
providing a system that comprises:
   a reactor housing that is fabricated from a radioactive shielding material and has both an internal volume and a surface that comprises an entry port and an exit port; and
   a first chromatographic column that is positioned within said internal volume, wherein said first chromatographic column is housed within a column assembly comprising
   a column housing defining an internal space for receiving said first chromatographic column;
   a column adaptor plate;
   an exit pipe in fluid communication with said first chromatographic column via said column housing and with an exit connection that is mounted on said column adaptor plate; and
   an entry pipe in fluid communication with said first chromatographic column via said column housing and with an entry needle that is disposed in an adaptor plate entry port that is mounted on said column adaptor plate;
      wherein said column assembly is configured for insertion as a unit into the internal volume of said reactor housing through an opening in an upper portion of said reactor housing;
   removing said first chromatographic column from said internal volume by extracting said column assembly through an opening in an upper portion of said reactor housing;
   positioning a second chromatographic column within said internal volume by inserting a second column assembly through said opening in said reactor housing;
   positioning a first delivery vessel comprising a solution of at least a first radioisotope external to said reactor housing and in fluid communication with said second chromatographic column for a time and under conditions effective to elute said second chromatographic column with at least a portion of said solution; and,
   positioning a first collection vessel external to said reactor housing and in fluid communication with said second chromatographic column.

### BRIEF DESCRIPTION OF THE DRAWINGS

FIG. 1 is a cutaway side view depicting one generator system according to the invention.

FIG. 2 is a cutaway side view depicting one shielded filter module according to the invention.

FIG. 3 is an isometric view of one cart according to the invention.

FIG. 4 is a cutaway side view of one generator system according to the invention.

FIG. 5 is a perspective view of a column assembly being inserted into an internal volume of a reactor housing according to the invention.

FIG. 6 is a perspective view of a radioactive shielding plug being inserted into an opening in a reactor housing according to the invention.

FIG. 7 is a perspective view of an adapter disk disposed on the surface of a reactor housing according to the invention.

### DETAILED DESCRIPTION OF ILLUSTRATIVE EMBODIMENTS

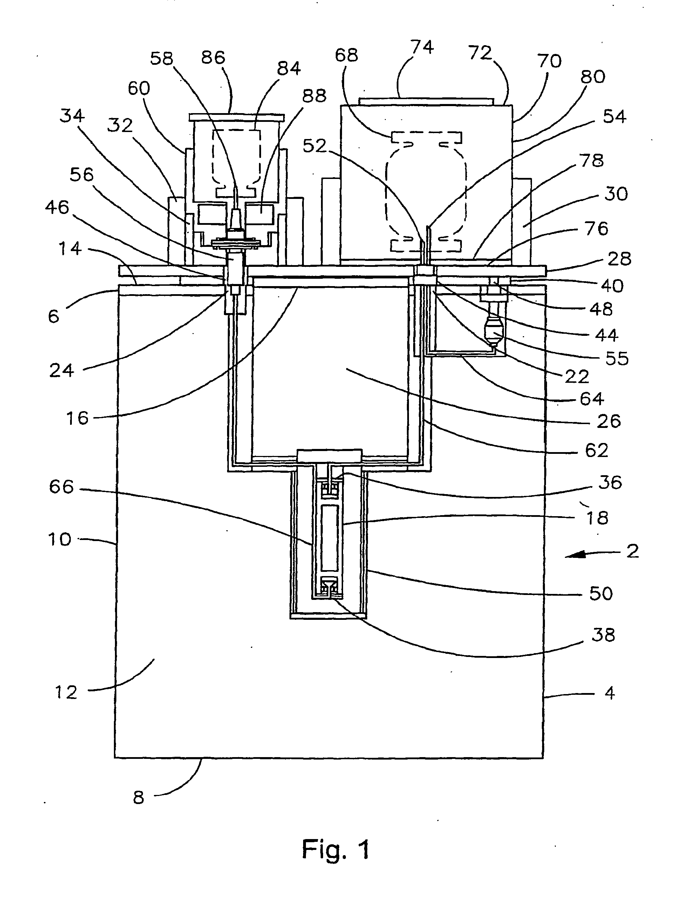

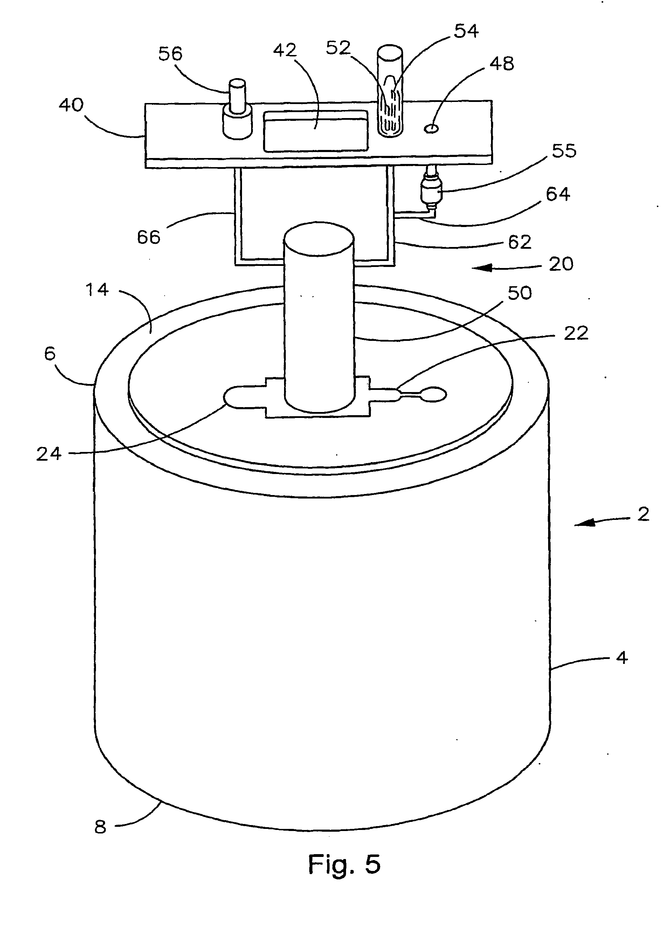

With reference to the drawings, **FIG. 1** shows one type of generator system **2** according to the invention. The generator system may include a reactor housing **4** fabricated from a radioactive shielding material such as lead, tungsten, or depleted uranium. The reactor housing **4** may be substantially cylindrical, as shown in **FIG. 1**. In another embodiment, the reactor housing may be substantially rectilinear. The reactor housing **4** may include a first end **6,** a second end **8**, and a wall **10** extending between said first end **6** and said second end **8.** The reactor housing **4** may have both an internal volume **12** and a surface **14** that comprises an opening **16** for inserting a column **18** (said column may be included in a column assembly **20**, shown in more detail in **FIG. 5**), an entry port **22**, and an exit port **24**. The opening **16**, entry port **22** and exit port **24** may be positioned at said first end **6** of said housing **4**. A radioactive shielding plug **26** may be disposed in said opening **16** in said surface **14** above said column **18**. The radioactive shielding plug **26** may be fabricated from a radioactive shield material such as lead, tungsten, or depleted uranium. The reactor housing **4** may have an adapter disk **28** disposed on the surface **14** of said reactor housing **4** that comprises a ridge of guide material **30** that may extend around said entry port **22** and a ridge of guide material **32** that may extend around said exit port **24**. Preferably, the adapter disk **28** and ridges of guide material **30** and **32** are plastic. A ridge of radioactive shielding material **34** may extend around said exit port **24**.

A chromatographic column **18** may be positioned within said internal volume **12** such that a first end **36** of said column **18** is in fluid communication with said entry port **22** and a second end **38** of said column **18** is in fluid communication with said exit port **24**. In one embodiment, the column **18** may be included in a column assembly **20**. The column assembly **20**, in turn, may comprise a column adaptor plate **40** having a radioactive shielding plug opening **42**, an adaptor plate entry port **44** and an adaptor plate exit port **46** corresponding to said entry port **22** and said exit port **24** of said reactor housing, respectively, an adaptor plate vent port **48** (which may include a vent filter), and a column housing **50**, preferably fabricated from radioactive shielding material such as lead, tungsten, or depleted uranium. The column assembly **20** may comprise an entry needle **52** and a vent needle **54** disposed in said adaptor plate entry port **44**, and an exit connection **56**, adapted for fluid communication with a changeable sterile needle **58** of a filter module **60**. An entry pipe **62** may extend from said entry needle **52** to said first end **36** of said column **18**. A vent pipe **64** may extend from said vent needle **54** to a safety valve 55 (said safety valve 55 protecting said vent filter by preventing back pressure from being released onto said vent filter) and said safety valve **55** may extend to said vent port **48**. An exit pipe **66** may extend from said second end **38** of said column **18** to said exit connection **50**. The column **18** may be inserted into said internal volume **12** of said reactor housing **4** through said opening **16** in said surface **14** of said reactor housing **4**. Alternatively, said, column assembly **20** may be positioned such that said column **18** is disposed in said internal volume **12** of said reactor housing **4**. The column **18** may comprise at least one radioisotope, including but not limited to Mo-99, Tc-99m, Y-90, Re-188, or Ga-68. In preferred embodiments, the column **18** is fabricated from glass. The column **18** may contain alumina in the form of aluminum oxide, Al₂O₃ (mp of about 2,000°C and specific gravity of about 4.0). Preferably, the column **18** is a glass column that contains aluminum oxide. The aluminum oxide powder preferably has a particle size of from about 20 to about 200 µm. In addition to the aluminum oxide powder, the column **18** may also include silica gel having a particle size of from about 20 to about 100 µm. The column **18** may also comprise one or more layers or polypropylene filter membranes, deactivated fused silica wool, and/or one or more glass filter membranes. The filter membranes preferably measure from about 0.2 to about 10 µm and may comprise polyether sulfone, Acetal plastic plugs with funnel drains, or stainless steel tubing with needle and filter adaptors. Particularly preferred filter membranes are those fabricated from polyether sulfone at a size of 0.2 µm.

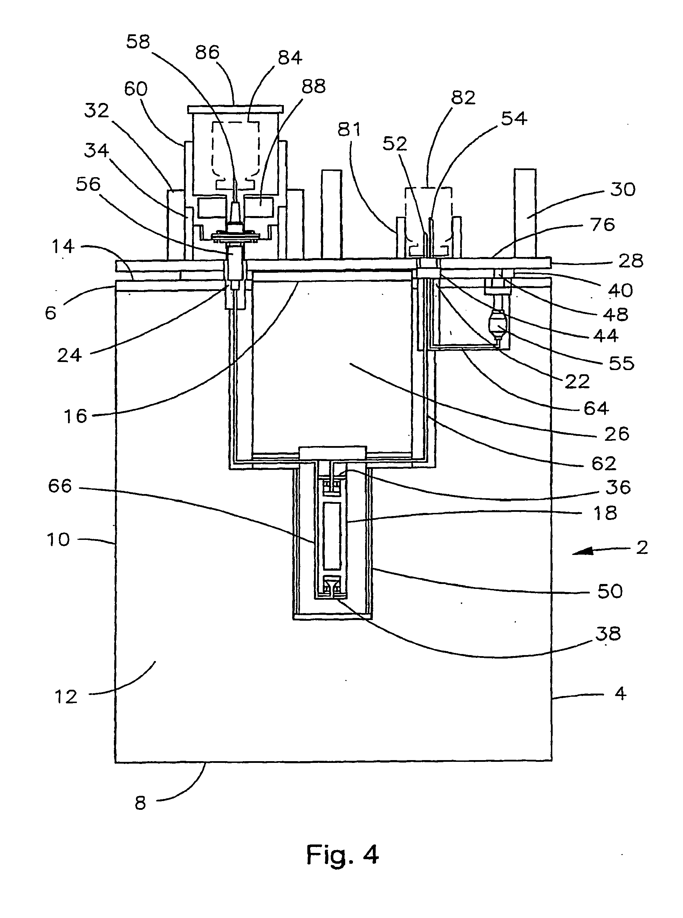

A delivery vessel **68** may be disposed external to said reactor housing **4** and in fluid communication with said entry port **22**. The delivery vessel **68** may be a 3 to 20 ml (preferably 10 ml) borosilicate glass vessel. The delivery vessel **68** may be contained within a delivery housing **70** that is fabricated from radioactive shielding material such as lead, tungsten, or depleted uranium. The delivery housing **70** preferably is fabricated from radioactive shielding material and has a first end **72** that includes a first coupling **74**, a second end **76** that includes a second coupling **78**, and a **wall 80** extending between said first end **72** and said second end **76**. The first coupling **74** and second coupling **78** may be threaded or may form a lure lock. In certain embodiments, delivery vessel **68** comprises a solution of at least one radioisotope, including but not limited Mo-99 or Tc-99m in the form of sodium molybdate Mo-99 or sodium pertechnetate Tc-99m, respectively. In such embodiments, delivery vessel **68** preferably comprises from about 1 to about 50 Ci (1 curie (Ci) is 37 gigabecquerels (GBq) exactly and 1 Bug = 2.027×10⁻¹¹ Ci). In other embodiments, delivery vessel **68** comprises Normal Saline [0.9%] solution. The delivery housing **70** may abut a ridge of guide material **30** that may be external to said reactor housing **4** and may extend around said entry port **22**. The delivery housing **70** may be at least partially contained within a ridge of guide material **30** that may be external to said reactor housing and may extend around said entry port **22**. In certain embodiments, an adapter guide ridge **81** may be disposed on said adapter disk 28 circumferentially internal to said ridge of guide material **30**. A saline vessel **82** may be disposed external to said reactor housing **4**, and in fluid communication with said entry port **22** and may abut said adapter guide ridge **81 (****FIG. 4****)** that extends around said entry port **22**. The saline vessel **82** may comprise Normal Saline [0.9%] solution.

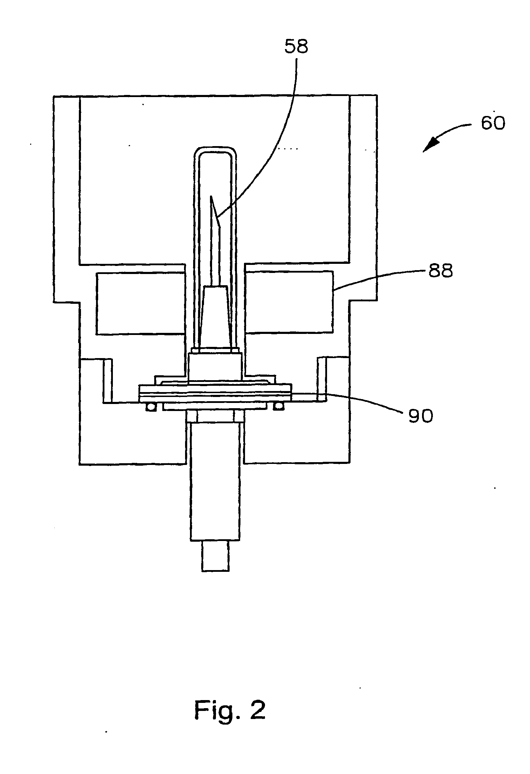

The generator system **2** may comprise a collection vessel **84** that is disposed external to said reactor housing **4** and in fluid communication with said exit port **24** via a filter module **60**, discussed below with reference to **FIG. 2**. The collection vessel **84** may be evacuated, and ultimately is used to collect a solution of at least one radioisotope. The collection vessel **84** may be a 10 to 30 ml borosilicate glass vessel. Preferably, the collection vessel **84** is a 20 to 30 ml sterile, evacuated, borosilicate glass vessel. As shown in **FIG. 1**, collection vessel **84** is contained within a collection housing **86** that is fabricated from radioactive shielding material.

As shown in **FIG. 2**, a filter module **60** may be disposed external to the reactor housing **4** and may be in fluid communication with said exit port **24**. The filter module **60** may include a radioactive shielding material insert **88** that is positioned between said collection vessel **84** and said reactor housing **4**. The filter module **60** preferably holds a sterile 13 to 25 mm filter membrane **90** of 0.1 to 0.22 µm size, preferably of 0.2 µm size. The filter module **60** may be attached via a tread type adaptor to join the reactor to a sterile evacuated collection vessel **84**. A changeable sterile needle **58** may be attached to the sterile filter **90** for daily sterile eluting procedures. The filter module **60** may abut a ridge of radioactive shielding material **34** and/or may abut a ridge of guide material **32** that is external to said reactor housing **4** and extends around said exit port **24**. The filter module **60** may be at least partially contained within said ridge of radioactive shielding material **34** and/or said ridge of guide material **32.** The radioactive shielding material may be lead, tungsten, or depleted uranium.

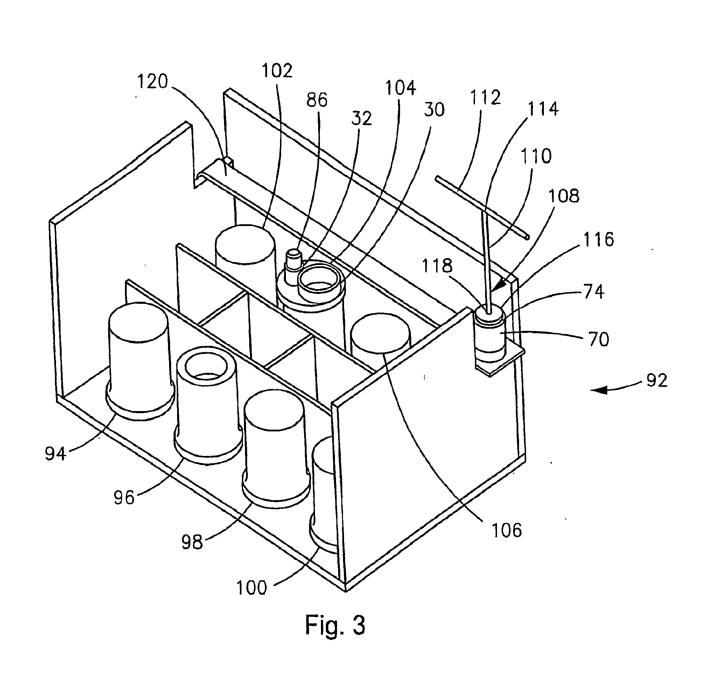

The generator system may include a cart **92,** as shown in **FIG. 3**. The cart **92** preferably is fabricated from steel and lead. The frame is preferably fabricated from steel. The walls of cart **92** are preferably lead plates or lead brick. The cart **92** may hold a plurality of reactor housings **94, 96, 98, 100, 102, 104, and 106** that may be fabricated from radioactive shielding material The cart **92** may also comprise a plurality of delivery vessels **68** and/or a plurality of evacuated collection vessels **84** and/or a plurality of saline vessels **82**. The cart **92** may include a transfer tool **108** that comprises a pick-up and release rod **110** having a handle **112** at a first end **114** thereof and a coupling **116** at a second end **118** thereof that is compatible with the first coupling **74** of said delivery housing **70**. The transfer tool **108** preferably is a universal T-bar handle. The cart **92** may also include a conveyor belt **120**, or other motion enhancing device, to assist a user with moving a delivery housing **70** proximate to a reactor housing **(*e.g.*, 94, 96, 98,100, 102, 104, and 106).**

Methods of radioisotope generation according to the invention may be described with reference to **FIGs. 1** and **2****.** In certain embodiments, such methods involve positioning a first delivery vessel **68** comprising a solution of at least one radioisotope external to said reactor housing **4** and in fluid communication with said entry port **22** for a time and under conditions effective to elute said chromatographic column **18** with at least a portion of said solution. The first delivery vessel **68** may be positioned by mating said first coupling **74** at said first end **72** of said delivery housing **70** with transfer tool **108** and lifting the delivery housing **70.** The coupling **78** at said second end **76** of said first delivery housing **70** may be mated with a coupling on said reactor housing **4** that is compatible with said coupling **78** at said second end **76** of said first delivery housing **70**. The delivery vessel **68** may be removed from said position relative to said reactor housing **4** by lifting said delivery housing **70**. Subsequent delivery vessels comprising saline solution or a solution of at least one radioisotope may be used to elute said column **18** with at least a portion of said solutions. A collection vessel **84** may be positioned external to said reactor housing **4** and in fluid communication with said exit port **22** via said filter module **60**. The column **18**, column assembly **20**, filter module **60**, filter membrane **90**, sterile needle **58**, delivery vessel **68**, collection vessel **84** and/or saline vessel **82** may be removed from said reactor housing **10** and may be replaced by subsequent columns, column assemblies, filter modules, filter membranes, sterile needles, delivery vessels, collection vessels and/or saline vessels, respectively, as appropriate.

In certain embodiments, methods of radioisotope generation according to the invention involve the receipt of customer information including a target output of a radioisotope, the addition of a solution of a parent radioisotope to a delivery vessel in an amount sufficient to produce said target output upon decay of said parent radioisotope, and the shipment of said delivery vessel to said customer. The customer's generator system, in turn, may be loaded and re-loaded with varying volumes of said parent radioisotope effective to collect specific target concentrations of the desired radioisotope. The generator systems may be re-loaded more than 2 times, more preferably more than 4 times, and most preferably more than 6 times. Preferably, the customer information received includes a target output of Tc-99m from 1 to 50 Ci, and the solution added to the delivery vessel includes Mo-99 in an amount sufficient to produce said target output upon decay of said Mo-99.

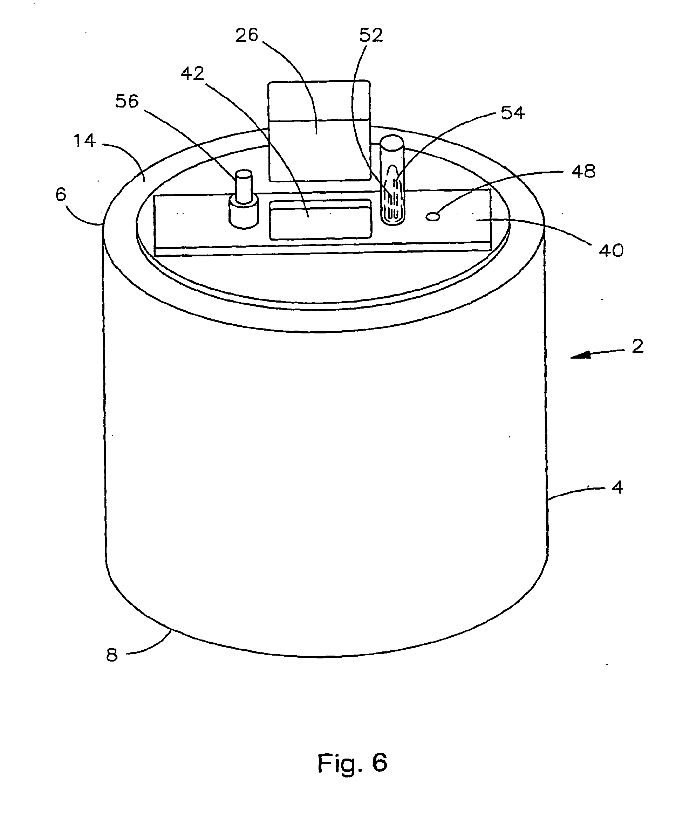

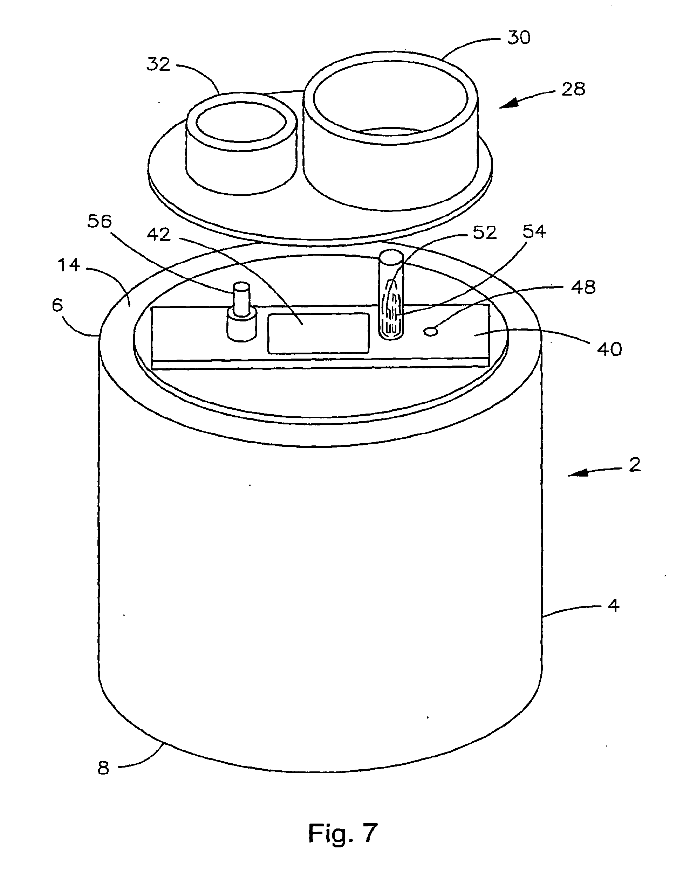

A kit for radioisotope generation is also contemplated and may be described with reference to **FIGs. 1-3**. The kit may include a column **18** or a column assembly **20**, a delivery housing **70** containing a delivery vessel **68** comprising at least one radioisotope, a filter module **60** comprising a radioactive shielding material insert **88**, a transfer **tool 108**, a plurality of evacuated collection vessels **84** and a plurality of saline vessels **82**. The kit can be used to replenish existing reactor housings **4** and thereby avoids shipment and disposal thereof.
In addition, exemplary steps for radioisotope generation according to the invention may be described with reference to **FIGs. 1-7**. As shown in **FIG. 5**, a column assembly **20** may be inserted into an internal volume **12** of a reactor housing **4** (said reactor housing having an entry port **22** and an exit port **24**), through an **opening 16** in the surface **14** of the reactor housing **4**. Then, as shown in **FIG. 6**, the opening **16** above the column **18** may be plugged with a radioactive shielding plug **26**. Then, as shown in **FIG. 7**, an adapter disk **28**, comprising a ridge of guide material **30** extending around the entry port **22** and a ridge of guide material **32** extending around the exit port **24**, may be disposed on the surface **14** of the reactor housing **4.** A filter module **60** may then be disposed external to the reactor housing **4** in fluid communication with the exit port **24**. A delivery vessel **68** containing a radioisotope, contained in a delivery housing **70**, may then be disposed external to the reactor housing **4** and in fluid communication with the entry port **22.** An evacuated collection vessel **84**, contained with a collection housing **86**, may then be disposed external to the reactor housing **4** in fluid communication with the exit port **24** via the filter module **60.** After waiting a suitable amount of time (*e.g*., more than about three minutes), the collection vessel **84** and then the delivery vessel **68** may be removed. An adapter guide ridge **81** may then be disposed on the surface of the adapter disk **28** such that it extends around the entry port **22**. A saline vessel **82** may then be disposed external to the reactor housing **4** and in fluid communication with the entry port **22**. An evacuated collection vessel **84**, contained within a collection housing **86**, may then be disposed external to the reactor housing **4** and in fluid communication with the exit port **24** via the filter module **60.** After again waiting a suitable amount of time, said collection housing **86** may be removed. An evacuated collection vessel **84**, contained within a collection housing **86**, may then be disposed external to the reactor housing **4** and in fluid communication with the exit port **24** via the filter module **60**. The aforementioned exemplary steps may be repeated with subsequent delivery vessels, columns, filter modules and collection vessels as may be appropriate.

Thus, there have been described systems and methods for producing customized, predictable and reproducible supplies of radioisotopes that do not require weekly replacement, handling and transport of heavy shielding materials associated with conventional generators. It will be appreciated that numerous modifications may be made to the example embodiments described herein, and that such modifications do not depart from the scope of the invention as defined by the following claims.

## Claims

1. A system comprising:
a reactor housing (4) that is fabricated from a radioactive shielding material and has both an internal volume (12) and a surface (14) that comprises an entry port (22) and an exit port (24);
a first chromatographic column (18) that is positioned within said internal volume (12) wherein;
said first chromatographic column (18) is housed within a column assembly (20) comprising:
a column housing (50) defining an internal space for receiving said first chromatographic column (18);
a column adaptor plate (40);
an exit pipe (66) in fluid communication with said first chromatographic column (18) via said column housing (50) and with an exit connection (46) that is mounted on said column adaptor plate (40); and
an entry pipe (62) in fluid communication with said first chromatographic column (18) via said column housing (50) and with an entry needle (52) that is disposed in an adaptor plate entry port (44) that is mounted on said column
adaptor plate (40);
wherein said column assembly (20) is configured for insertion as a unit into the internal volume (12) of said reactor housing (4) through an opening in an upper portion of said reactor housing (4); and;
a filter module (60) that is disposed external to said reactor housing (4) and in fluid communication with said column (18).

2. The system of claim 1 further comprising one or more of the following:
(i) a delivery vessel (68) that is disposed external to said reactor housing (4) and in fluid communication with said first chromatographic column (18);
(ii) a collection vessel (84) that is disposed external to said reactor housing (4) and in fluid communication with said first chromatographic column (18) via said filter module (60);
(iii) an adapter disk (28) disposed on said reactor housing (4), comprising a ridge of material (30) that extends around said entry port (22) and a ridge of material (34) that extends around said exit port (24); and
(iv) a cart (92) that includes one or more of
a plurality of delivery vessels (68) that each independently comprises a reactor vessel;
a plurality of delivery vessels that each independently comprises a solution of at least one radioisotope and is contained within a delivery housing that is fabricated from radioactive shielding material;
a plurality of evacuated collection vessels (84); and
a plurality of saline vessels (82).

3. A method comprising the steps of:
providing a system that comprises:
a reactor housing (4) that is fabricated from a radioactive shielding material and has both an internal volume (12) and a surface (14) that comprises an entry port (22) and an exit port (24);
a first chromatographic column (18) that is positioned within said internal volume (12) wherein
said first chromatographic column (18) is housed within a column assembly (20) comprising:
a column housing (50) defining an internal space for receiving said first chromatographic column (18);
a column adaptor plate (40);
an exit pipe (66) in fluid communication with said first chromatographic column (18) via said column housing (50) and with an exit connection (46) that is mounted on said column adaptor plate (40); and
an entry pipe (62) in fluid communication with said first chromatographic column (18) via said column housing (50) and with an entry needle (52) that is disposed in an adaptor plate entry port (44) that is mounted on said column adaptor plate (40);
wherein said column assembly (20) is configured for insertion as a unit into the internal volume (12) of said reactor housing (4) through an opening in an upper portion of said reactor housing (4); and;
a first filter module (60) that is disposed external to said reactor housing (4) and in fluid communication with said first chromatographic column (18); and
positioning a first delivery vessel (68) comprising a solution of at least one radioisotope external to said reactor housing (4) and in fluid communication with said first chromatographic column (18) for a time and under conditions effective to elute said first chromatographic column (18) with at least a portion of said solution; and,
positioning a collection vessel (84) external to said reactor housing (4) and in fluid communication with said exit port (24) via said filter module (60).

4. The method of claim 3 further comprising
(i) removing said first delivery vessel (68) from said position relative to said reactor housing (4); and/or
(ii) removing said first filter module (60).

5. The method of claim 3 comprising the steps of:
providing said system; and
positioning a first delivery vessel (68) comprising a solution of at least one radioisotope external to said reactor housing (4) and in fluid communication with said entry port (44) for a time and under conditions effective to elute said chromatographic column (18) with at least a portion of said solution.

6. The method of claim 3 comprising the steps of:
providing said system; and
removing said first chromatographic column (18) from said reactor housing (4).

7. The method of claim 3 further comprising positioning a subsequent chromatographic column in said reactor housing (4) such that a first end of said column is in fluid communication with said entry port (22) and a second end of said column is in fluid communication with said exit port (24).

8. The method of claim 3 comprising the steps of:
providing said system; and
removing said first filter module (60).

9. The method of claim 3 further comprising positioning a subsequent filter module external to said reactor housing (4) and in fluid communication with said exit port (24).

10. The method of claim 3 comprising the steps of:
providing said system; and
positioning a collection vessel (84) external to said reactor housing (4) and in fluid communication with said exit port (24) via said filter module (60).

11. The method according to claim 3 further comprising the steps of:
receiving customer information including a target output of a radioisotope; and
adding a solution of a parent radioisotope to a delivery vessel (68) in an amount sufficient to produce said target output upon decay of said parent radioisotope.

12. The method of claim 11 further comprising shipping said delivery vessel (68) to said customer.

13. A method comprising the steps of:
providing a system that comprises:
a reactor housing (4) that is fabricated from a radioactive shielding material and has both an internal volume (12) and a surface (14) that comprises an entry port (22) and an exit port (24); and
a first chromatographic column (18) that is positioned within said internal volume (12).
wherein said first chromatographic column (18) is housed within a column assembly (20) comprising
a column housing (50) defining an internal space for receiving said first chromatographic column (18);
a column adaptor plate (40);
an exit pipe (66) in fluid communication with said first chromatographic column (18) via said column housing (50) and with an exit connection (46) that is mounted on said column adaptor plate (40); and
an entry pipe (62) in fluid communication with said first chromatographic column (18) via said column housing (50) and with an entry needle (52) that is disposed in an adaptor plate entry port (44) that is mounted on said column adaptor plate (40);
wherein said column assembly (20) is configured for insertion as a unit into the internal volume (12) of said reactor housing (4) through an opening in an upper portion of said reactor housing (4);
removing said first chromatographic column (18) from said internal volume (12) by extracting said column assembly (20) through an opening in an upper portion of said reactor housing (4);
positioning a second chromatographic column within said internal volume (12) by inserting a second column assembly through said opening in said reactor housing (4);
positioning a first delivery vessel (68) comprising a solution of at least a first radioisotope external to said reactor housing (4) and in fluid communication with said second chromatographic column for a time and under conditions effective to elute said second chromatographic column with at least a portion of said solution; and,
positioning a first collection vessel (84) external to said reactor housing (4) and in fluid communication with said second chromatographic column.

14. The method of claim 13 further comprising removing said first delivery vessel (68) from said position relative to said reactor housing (4).

15. The method of claim 13 further comprising positioning a second delivery vessel comprising saline solution external to said reactor housing (4) and in fluid communication with said second chromatographic column for a time and under conditions effective to elute said second chromatographic column with at least a portion of said saline solution.

16. The method of claim 13 further comprising communicating a target output of at least a second radioisotope to a vendor of said solution of at least a first radioisotope.

## Patentansprüche

1. System, umfassend:
ein Reaktorgehäuse (4), das aus einem Radioaktivität abschirmenden Material hergestellt ist und das sowohl ein inneres Volumen (12) als auch eine Oberfläche (14) mit einer Eintrittsöffnung (22) und einer Austrittsöffnung (24) aufweist,
eine erste chromatographische Säule (18), die in dem inneren Volumen (12) angeordnet ist, wobei
die erste chromatographische Säule (18) in einer Säulenanordnung (20) angeordnet ist, die:
ein Säulengehäuse (50), das einen inneren Raum zum Aufnehmen der ersten chromatographischen Säule (18) definiert,
eine Säulenanschlussplatte (40),
ein Austrittsröhrchen (66), das in Fluidverbindung steht mit der ersten chromatographischen Säule (18) über das Säulengehäuse (50) und mit einer Austrittsverbindung (46), die auf der Säulenanschlussplatte (40) montiert ist, und
ein Eintrittsröhrchen (62), das in Fluidverbindung steht mit der ersten chromatographischen Säule (18) über das Säulengehäuse (50) und mit einer Eintrittsnadel (52), welche in einer Anschlussplatteneintrittsöffnung (44) angeordnet ist, die auf der
Anschlussplatte (40) montiert ist, umfasst,
wobei die Säulenanordnung (20) zum Einführen als eine Einheit in das innere Volumen (12) des Reaktorgehäuses (4) durch eine Öffnung in einem oberen Abschnitt des Reaktorgehäuses (4) ausgestaltet ist, und
ein Filtermodul (60), das außerhalb des Reaktorgehäuses (4) angeordnet ist und in Fluidverbindung mit der Säule (18) steht.

2. System nach Anspruch 1, das weiter eines oder mehrere der nachfolgenden Merkmale aufweist:
(i) ein Abgabebehälter (68), der außerhalb des Reaktorgehäuses (4) angeordnet ist und der in Fluidverbindung mit der ersten chromatographischen Säule (18) steht,
(ii) ein Sammelbehälter (84), der außerhalb des Reaktorgehäuses (4) angeordnet ist und der über das Filtermodul (60) in Fluidverbindung mit der ersten chromatographischen Säule (18) steht,
(iii) eine Adapterscheibe (28), die auf dem Reaktorgehäuse (4) angeordnet ist und einen Materialwulst (30) aufweist, der sich um die Eintrittsöffnung (22) herum erstreckt, und einen Materialwulst (34), der sich um die Austrittsöffnung (24) herum erstreckt, und
(iv) einen Wagen (92), umfassend einen oder mehrere aus einer Mehrzahl von Abgabebehältern (68), von denen jeder unabhängig voneinander einen Reaktorbehälter aufweist,
einer Mehrzahl von Abgabebehältern, von denen jeder unabhängig voneinander eine Lösung von zumindest einem Radioisotop aufweist und in einem Abgabegehäuse enthalten ist, welches aus einem Radioaktivität abschirmenden Material hergestellt ist,
einer Mehrzahl von evakuierten Sammelbehältern (84) und
einer Mehrzahl von Salzbehältern (82).

3. Verfahren, welches die Schritte aufweist:
Bereitstellen eines Systems, umfassend:
ein Reaktorgehäuse (4), das aus einem Radioaktivität abschirmenden Material hergestellt ist und das sowohl ein inneres Volumen (12) als auch eine Oberfläche (14) mit einer Eintrittsöffnung (22) und einer Austrittsöffnung (24) aufweist,
eine erste chromatographische Säule (18), die in dem inneren Volumen (12) angeordnet ist, wobei
die erste chromatographische Säule (18) in einer Säulenanordnung (20) angeordnet ist, die:
ein Säulengehäuse (50), das einen inneren Raum zum Aufnehmen der ersten chromatographischen Säule (18) definiert,
eine Säulenanschlussplatte (40),
ein Austrittsröhrchen (66), das in Fluidverbindung steht mit der ersten chromatographischen Säule (18) über das Säulengehäuse (50) und mit einer Austrittsverbindung (46), die auf der Säulenanschlussplatte (40) montiert ist, und
ein Eintrittsröhrchen (62), das in Fluidverbindung steht mit der ersten chromatographischen Säule (18) über das Säulengehäuse (50) und mit einer Eintrittsnadel (52), welche in einer Anschlussplatteneintrittsöffnung (44) angeordnet ist, die auf der
Anschlussplatte (40) montiert ist, umfasst,
wobei die Säulenanordnung (20) zum Einführen als eine Einheit in das innere Volumen (12) des Reaktorgehäuses (4) durch eine Öffnung in einem oberen Abschnitt des Reaktorgehäuses (4) ausgestaltet ist, und
ein erstes Filtermodul (60), das außerhalb des Reaktorgehäuses (4)
angeordnet ist und in Fluidverbindung mit der Säule (18) steht, und Anordnen eines ersten Abgabebehälters (68), der eine Lösung von zumindest einem Radioisotop aufweist, außerhalb des Reaktorgehäuses (4) und derart in Fluidverbindung mit der ersten chromatographischen Säule (18) für eine Zeitspanne und unter Bedingungen, die ausreichen, um die erste chromatographischen Säule (18) mit zumindest einem Teil der Lösung zu eluieren, und
Anordnen eines Sammelbehälters (84) außerhalb des Reaktorgehäuses (4) derart, dass der Sammelbehälter über das Filtermodul (60) in Fluidverbindung mit der Austrittsöffnung (24) steht.

4. Verfahren nach Anspruch 3, welches weiter umfasst
(i) Entfernen des ersten Abgabebehälters (68) aus der Anordnung relativ zu dem Reaktorgehäuse (4) und/oder
(ii) Entfernen des Filtermoduls (60).

5. Verfahren nach Anspruch 3, welches die Schritte aufweist:
Bereitstellen des Systems und
Anordnen eines ersten Abgabebehälters (68), der eine Lösung von zumindest einem Radioisotop enthält, außerhalb des Reaktorgehäuses (4) und derart in Fluidverbindung mit der Eintrittsöffnung (44) für eine Zeitspanne und unter Bedingungen, die ausreichen, um die chromatographische Säule (18) mit zumindest einem Teil der Lösung zu eluieren.

6. Verfahren nach Anspruch 3, welches die Schritte aufweist:
Bereitstellen des Systems und
Entfernen der ersten chromatographischen Säule (18) von dem Reaktorgehäuse (4).

7. Verfahren nach Anspruch 3, welches weiter aufweist: Anordnen einer nachfolgenden chromatographischen Säule in dem Reaktorgehäuse (4) derart, dass ein erstes Ende der Säule in Fluidverbindung mit der Eintrittsöffnung (22) und ein zweites Ende der Säule in Fluidverbindung mit der Austrittsöffnung (24) steht.

8. Verfahren nach Anspruch 3, welches die Schritte aufweist:
Bereitstellen des Systems und
Entfernen des ersten Filtermoduls (60).

9. Verfahren nach Anspruch 3, welches weiter das Anordnen eines nachfolgenden Filtermoduls außerhalb des Reaktorgehäuses (4) und in Fluidverbindung mit der Austrittsöffnung (24) umfasst.

10. Verfahren nach Anspruch 3, welches die Schritte aufweist:
Bereitstellen des Systems und
Anordnen eines Sammelbehälters (84) außerhalb des Reaktorgehäuses (4) derart,
dass der Sammelbehälter über das Filtermodul (60) in Fluidverbindung mit der Austrittsöffnung (24) steht.

11. Verfahren nach Anspruch 3, welches weiter die Schritte aufweist:
Empfangen von Benutzerinformationen einschließlich einer anvisierten Ausgabemenge eines Radioisotops und
Hinzufügen einer Lösung eines Ausgangsradioisotops in einen Abgabebehälter (68) in einer Menge ausreichend zum Herstellen der anvisierten Ausgabemenge aus der Verfallsreihe des Ausgangsradioisotops.

12. Verfahren nach Anspruch 11, welches weiter das Abgeben des Abgabebehälters (68) an den Benutzer umfasst.

13. Verfahren, welches die Schritte aufweist:
Bereitstellen eines Systems, umfassend:
ein Reaktorgehäuse (4), das aus einem Radioaktivität abschirmenden Material hergestellt ist und das sowohl ein inneres Volumen (12) als auch eine Oberfläche (14) mit einer Eintrittsöffnung (22) und einer Austrittsöffnung (24) aufweist, und
eine erste chromatographische Säule (18), die in dem inneren Volumen (12) angeordnet ist, wobei die erste chromatographische Säule (18) in einer Säulenanordnung (20) angeordnet ist, die:
ein Säulengehäuse (50), das einen inneren Raum zum Aufnehmen der ersten chromatographischen Säule (18) definiert,
eine Säulenanschlussplatte (40),
ein Austrittsröhrchen (66), das in Fluidverbindung steht mit der ersten chromatographischen Säule (18) über das Säulengehäuse (50) und mit einer Austrittsverbindung (46), die auf der Säulenanschlussplatte (40) montiert ist, und
ein Eintrittsröhrchen (62), das in Fluidverbindung steht mit der ersten chromatographischen Säule (18) über das Säulengehäuse (50) und mit einer Eintrittsnadel (52), welche in einer Anschlussplattentrittsöffnung (44) angeordnet ist, die auf
der Anschlussplatte (40) montiert ist, umfasst,
wobei die Säulenanordnung (20) zum Einführen als eine Einheit in das innere Volumen (12) des Reaktorgehäuses (4) durch eine Öffnung in einem oberen Abschnitt des Reaktorgehäuses (4) ausgestaltet ist,
Entfernen der ersten chromatographischen Säule (18) aus dem inneren Volumen (12) durch Entnehmen der Säulenanordnung (20) durch eine Öffnung in einem oberen Abschnitt des Reaktorgehäuses (4),
Anordnen einer zweiten chromatographischen Säule innerhalb des inneren Volumens (12) durch Einführen einer zweiten Säulenanordnung durch die Öffnung in dem Reaktorgehäuse (4),
Anordnen eines ersten Abgabebehälters (68), der eine Lösung von zumindest einem ersten Radioisotop enthält, außerhalb des Reaktorgehäuses (4) und derart in Fluidverbindung mit der zweiten Säulenanordnung für eine Zeitspanne und unter Bedingungen, die ausreichen, um die zweite Säulenanordnung mit zumindest einem Teil der Lösung zu eluieren, und
Anordnen eines ersten Sammelbehälters (84) außerhalb des Reaktorgehäuses (4) und in Fluidverbindung mit der zweiten chromatographischen Säule.

14. Verfahren nach Anspruch 13, welches weiter aufweist: Entfernen des ersten Abgabebehälters (68) aus dessen Anordnung relativ zu dem Reaktorgehäuse (4).

15. Verfahren nach Anspruch 13, welches weiter umfasst: Anordnen eines zweiten Abgabebehälters, der eine Salzlösung enthält, außerhalb des Reaktorgehäuses (4) und derart in Fluidverbindung mit der zweiten chromatographischen Säule für eine Zeitspanne und unter Bedingungen, die ausreichen, um die zweite chromatographische Säule mit zumindest einem Teil der Salzlösung zu eluieren.

16. Verfahren nach Anspruch 13, welches weiter umfasst: Weitergabe der anvisierten Ausgabemenge zumindest eines zweiten Radioisotops an einen Lieferanten der Lösung zumindest eines ersten Radioisotops.

## Revendications

1. Système comprenant :
un logement de réacteur (4) qui est fabriqué à partir d'un matériau de blindage radioactif et qui présente à la fois un volume interne (12) et une surface (14) qui comprend un orifice d'entrée (22) et un orifice de sortie (24) ;
une première colonne chromatographique (18) qui est positionnée à l'intérieur dudit volume interne (12) ; dans lequel
ladite première colonne chromatographique (18) est logée à l'intérieur d'un ensemble de colonne (20) comprenant :
un logement de colonne (50) définissant un espace interne pour recevoir ladite première colonne chromatographique (18) ;
une plaque d'adaptation de colonne (40) ;
un tuyau de sortie (66) en communication fluide avec ladite première colonne chromatographique (18) par l'intermédiaire dudit logement de colonne (50) et avec un raccord de sortie (46) qui est monté sur ladite plaque d'adaptation de colonne (40) ; et
un tuyau d'entrée (62) en communication fluide avec ladite première colonne chromatographique (18) par l'intermédiaire dudit logement de colonne (50) et avec une aiguille d'entrée (52) qui est disposée dans un orifice d'entrée de plaque d'adaptation (44) qui est monté sur ladite plaque d'adaptation de colonne (40) ;
dans lequel ledit ensemble de colonne (20) est configuré pour être inséré en tant qu'unité dans le volume interne (12) dudit logement de réacteur (4) à travers une ouverture dans une partie supérieure dudit logement de réacteur (4) ; et
un module de filtre (60) qui est disposé à l'extérieur dudit logement de réacteur (4) et en communication fluide avec ladite colonne (18).

2. Système selon la revendication 1, comprenant en outre un ou plusieurs des éléments suivants :
(i) une cuve de distribution (68) qui est disposée à l'extérieur dudit logement de réacteur (4) et en communication fluide avec ladite première colonne chromatographique (18) ;
(ii) une cuve de collecte (84) qui est disposée à l'extérieur dudit logement de réacteur (4) et en communication fluide avec ladite première colonne chromatographique (18) par le biais dudit module de filtre (60) ;
(iii) un disque d'adaptation (28) disposé sur ledit logement de réacteur (4), comprenant un bourrelet de matière (30) qui s'étend autour dudit orifice d'entrée (22) et un bourrelet de matière (34) qui s'étend autour dudit orifice de sortie (24) ; et
(iv) un chariot (92) qui comprend un ou plusieurs
d'une pluralité de cuves de distribution (68) qui comprennent chacune indépendamment une cuve de réacteur ;
d'une pluralité de cuves de distribution qui comprennent chacune indépendamment une solution d'au moins un radio-isotope et sont contenues à l'intérieur d'un logement de distribution qui est fabriqué à partir d'un matériau de blindage radioactif ;
d'une pluralité de cuves de collecte sous vide (84) ; et
d'une pluralité de cuves de solution saline (82).

3. Procédé comprenant les étapes de :
fournir un système qui comprend :
un logement de réacteur (4) qui est fabriqué à partir d'un matériau de blindage radioactif et qui présente à la fois un volume interne (12) et une surface (14) qui comprend un orifice d'entrée (22) et un orifice de sortie (24) ;
une première colonne chromatographique (18) qui est positionnée à l'intérieur dudit volume interne (12) dans lequel
ladite première colonne chromatographique (18) est logée à l'intérieur d'un ensemble de colonne (20) comprenant :
un logement de colonne (50) définissant un espace interne pour recevoir ladite première colonne chromatographique (18) ;
une plaque d'adaptation de colonne (40) ;
un tuyau de sortie (66) en communication fluide avec ladite première colonne chromatographique (18) par le biais dudit logement de colonne (50) et avec un raccord de sortie (46) qui est monté sur ladite plaque d'adaptation de colonne (40) ; et
un tuyau d'entrée (62) en communication fluide avec ladite première colonne chromatographique (18) par le biais dudit logement de colonne (50) et avec une aiguille d'entrée (52) qui est disposée dans un orifice d'entrée de plaque d'adaptation (44) qui est monté sur ladite plaque d'adaptation de colonne (40) ;
dans lequel ledit ensemble de colonne (20) est configuré pour être inséré en tant qu'élément dans le volume interne (12) dudit logement de réacteur (4) à travers une ouverture dans une partie supérieure dudit logement du réacteur (4) ; et
un premier module de filtre (60) qui est disposé à l'extérieur dudit logement de réacteur (4) et en communication fluide avec ladite première colonne chromatographique (18) ; et
positionner une première cuve de distribution (68) comprenant une solution d'au moins un radio-isotope à l'extérieur dudit logement de réacteur (4) et en communication fluide avec ladite première colonne chromatographique (18) pendant une durée et dans des conditions efficaces pour éluer ladite première colonne chromatographique (18) avec au moins une partie de ladite solution ; et
positionner une cuve de collecte (84) à l'extérieur dudit logement de réacteur (4) et en communication fluide avec ledit orifice de sortie (24) par le biais dudit module de filtre (60).

4. Procédé selon la revendication 3, comprenant en outre :
(i) retirer ladite première cuve de distribution (68) de ladite position par rapport audit logement de réacteur (4) ; et/ou
(ii) retirer ledit premier module de filtre (60).

5. Procédé selon la revendication 3, comprenant les étapes de :
fournir ledit système ; et
positionner une première cuve de distribution (68) comprenant une solution d'au moins un radio-isotope à l'extérieur dudit logement de réacteur (4) et en communication fluide avec ledit orifice d'entrée (44) pendant une durée et dans des conditions efficaces pour éluer ladite colonne chromatographique (18) avec au moins une partie de ladite solution.

6. Procédé selon la revendication 3, comprenant les étapes de :
fournir ledit système ; et
retirer ladite première colonne chromatographique (18) dudit logement de réacteur (4).

7. Procédé selon la revendication 3, comprenant en outre le positionnement d'une colonne chromatographique subséquente dans ledit logement de réacteur (4) de telle sorte qu'une première extrémité de ladite colonne est en communication fluide avec ledit orifice d'entrée (22) et qu'une seconde extrémité de ladite colonne est en communication fluide avec ledit orifice de sortie (24).

8. Procédé selon la revendication 3, comprenant les étapes de :
fournir ledit système ; et
retirer ledit premier module de filtre (60).

9. Procédé selon la revendication 3, comprenant en outre le positionnement d'un module de filtre subséquent à l'extérieur dudit logement de réacteur (4) et en communication fluide avec ledit orifice de sortie (24).

10. Procédé selon la revendication 3, comprenant les étapes de :
fournir ledit système ; et
positionner une cuve de collecte (84) à l'extérieur dudit logement de réacteur (4) et en communication fluide avec ledit orifice de sortie (24) par le biais dudit module de filtre (60).

11. Procédé selon la revendication 3 comprenant en outre les étapes de :
recevoir des informations de client comprenant une activité cible d'un radio-isotope ; et
ajouter une solution d'un radio-isotope parent dans une cuve de distribution (68) dans une quantité suffisante pour produire ladite activité cible lors de la dégradation dudit radio-isotope parent.

12. Procédé selon la revendication 11, comprenant en outre l'expédition de ladite cuve de distribution (68) audit client.

13. Procédé comprenant les étapes de :
fournir un système qui comprend :
un logement de réacteur (4) qui est fabriqué à partir d'un matériau de blindage radioactif et qui présente à la fois un volume interne (12) et une surface (14) qui comprend un orifice d'entrée (22) et un orifice de sortie (24) ; et
une première colonne chromatographique (18) qui est positionnée à l'intérieur dudit volume interne (12),
dans lequel ladite première colonne chromatographique (18) est logée à l'intérieur d'un ensemble de colonne (20) comprenant :
un logement de colonne (50) définissant un espace interne pour recevoir ladite première colonne chromatographique (18) ;
une plaque d'adaptation de colonne (40) ;
un tuyau de sortie (66) en communication fluide avec ladite première colonne chromatographique (18) par le biais dudit logement de colonne (50) et avec un raccord de sortie (46) qui est monté sur ladite plaque d'adaptation de colonne (40) ; et
un tuyau d'entrée (62) en communication fluide avec ladite première colonne chromatographique (18) par le biais dudit logement de colonne (50) et avec une aiguille d'entrée (52) qui est disposée dans un orifice d'entrée de plaque d'adaptation (44) qui est monté sur ladite plaque d'adaptation de colonne (40) ;
dans lequel ledit ensemble de colonne (20) est configuré pour être inséré en tant qu'élément dans le volume interne (12) dudit logement de réacteur (4) à travers une ouverture dans une partie supérieure dudit logement de réacteur (4) ; et
retirer ladite première colonne chromatographique (18) dudit volume interne (12) en extrayant ledit ensemble de colonne (20) à travers une ouverture dans une partie supérieure dudit logement de réacteur (4) ;
positionner une seconde colonne chromatographique à l'intérieur dudit volume interne (12) en insérant un second ensemble de colonne à travers ladite ouverture dans ledit logement de réacteur (4) ;
positionner une première cuve de distribution (68) comprenant une solution d'au moins un premier radio-isotope à l'extérieur dudit logement de réacteur (4) et en communication fluide avec ladite seconde colonne chromatographique pendant une durée et dans des conditions efficaces pour éluer ladite seconde colonne chromatographique avec au moins une partie de ladite solution ; et
positionner une première cuve de collecte (84) à l'extérieur dudit logement de réacteur (4) et en communication fluide avec ladite seconde colonne chromatographique.

14. Procédé selon la revendication 13, comprenant en outre le retrait de ladite première cuve de distribution (68) de ladite position par rapport audit logement de réacteur (4).

15. Procédé selon la revendication 13, comprenant en outre le positionnement d'une seconde cuve de distribution comprenant une solution saline à l'extérieur dudit logement de réacteur (4) et en communication fluide avec ladite seconde colonne chromatographique pendant une durée et dans des conditions efficaces pour éluer ladite seconde colonne chromatographique avec au moins une partie de ladite solution saline.

16. Procédé selon la revendication 13, comprenant en outre la communication d'une activité cible d'au moins un second radio-isotope à un fournisseur de ladite solution d'au moins un premier radio-isotope.
